Europäisches Patentamt

European Patent Office

Office européen des brevets

(19)

(11) **EP 1 119 972 B1**

(12) **EUROPEAN PATENT SPECIFICATION**

(45) Date of publication and mention
of the grant of the patent:
**03.04.2002 Bulletin 2002/14**

(51) Int Cl.⁷: **H04N 7/173**, G06F 17/30,
H04L 12/16
// H04M3:42

(21) Application number: **99970541.1**

(22) Date of filing: **30.09.1999**

(86) International application number:
**PCT/FI99/00806**

(87) International publication number:
**WO 00/22825 (20.04.2000 Gazette 2000/16)**

(54) **METHOD FOR GIVING ADVICE ON SELECTING SERVICES OFFERED VIA TELECOMMUNICATIONS NETWORK**

VERFAHREN ZUR BERATUNG ÜBER DIE AUSWAHL VON IN EINEM TELEKOMMUNIKATIONSNETZWERK ANGEBOTENEN DIENSTEN

PROCEDE PERMETTANT D'ORIENTER UN UTILISATEUR SUR LA SELECTION DE SERVICES OFFERTS VIA UN RESEAU DE TELECOMMUNICATION

(84) Designated Contracting States:
**AT BE CH CY DE DK ES FI FR GB GR IE IT LI LU MC NL PT SE**
Designated Extension States:
**LT LV**

(30) Priority: **30.09.1998 FI 982122**

(43) Date of publication of application:
**01.08.2001 Bulletin 2001/31**

(73) Proprietor: **Elisa Communications OYJ**
**00130 Helsinki (FI)**

(72) Inventors:
• **JORMAKKA, Jorma**
**FIN-01660 Vantaa (FI)**
• **SIMULA, Timo**
**FIN-00900 Helsinki (FI)**

(74) Representative: **Lipsanen, Jari Seppo Einari et al**
**Seppo Laine Oy,**
**Itämerenkatu 3 B**
**00180 Helsinki (FI)**

(56) References cited:
**EP-A1- 0 726 535        EP-A2- 0 854 645**
**WO-A1-97/48230        WO-A2-96/17467**
**US-A- 5 351 075**

EP 1 119 972 B1

**Description**

The present invention relates to a method according to the preamble of claim 1 for giving advice on selecting services, such as a video-on-demand service, offered via a telecommunications network.

A number of services, whose selection procedures may appear complex to the subscriber, are offered over the telephone network. The service discussed herein may be any kind of order service that must be selected from the group of offered services. The term service may comprise. e.g., the ordering of a certain file from a database. The group of services includes, among others, video-on-demand subscription, game/picture/information services and, in the near future, software subscription services, whereby the selection criteria between these may vary substantially.

In the present application, the term telephone network or telecommunications network refers to any network capable of information transfer in any conceivable format. Such telephone or telecommunications networks are, e.g., the Internet, a dial-up telephone network or a cable television network. The telephone network required herein may also be implemented as a cellular phone network.

In the prior art, the operation of the server catering to the service offered over a telecommunications network, such as a video-on-demand server, is based on a navigation technique which is controlled by the subscriber and offers the subscriber a plurality products from different groups. In the art is also emerging the concept of a subscriber-controlled agent which can be programmed by the subscriber with search information. The disadvantages of the prior-art technolon are therein that the server may contain a very large number of offered products from which the selection must be made and that a portion of the products offered by the server may be such that have already been ordered.

In patent application EP-A-0726535 is described a method for offering a service, particularly a video-on-demand service, arranged in a sequence on the basis of information gathered from previous orders. In the method of the application, each video movie category is provided with a search history table into which the overall number of searches focused on a given video title of a video movie category are stored. To find a certain video movie, the customer first selects a desired video movie category using a menu in a conventional manner. Next, the method of the application offers the customer the video movies of the category in their order of clientele preference.

A problem hampering the use of the method disclosed in patent application EP-A-0726535 is that the method helps the customer selection only at the lowest level of a video movie category, whereby the customer has to find the menu of the desired category all by himself, sometimes using an extremely complicated search menu tree.

It is an object of the present invention to overcome the drawbacks of the above-described technique and to provide an entirely novel type of method for controlling a service offered over a telephone network.

The goal of the invention is achieved by means of gathering customer-specific information about the user profile during the ordering process of services and then using the thus obtained user profile information for establishing a customer-specific service profile. The information to be gathered particularly comprises the subscriber's accumulated number of orders and number of orders focused on a given service category. Further information is gathered on all orders placed using the control technique of the present method. On the basis of this information, the customer is guided to use services controllable by the present method, whereby said services may be located under several service menus, sorted in a predicted order of preference. The order of preference is formed on the basis of a priority weight defined separately for each service.

More specifically, the method according to the invention is characterized by what is stated in the characterizing part of claim 1.

The invention offers significant benefits.

The selection offered to the customer puts more weight on the customer's personal interests, earlier orders and earlier searches. In certain applications (e.g., video-on-demand), items included in the customer's earlier orders can be omitted from the list of offered products thus reducing the number of presented products down to a more comprehensible level.

In certain applications (e.g., music libraries), a suitable number of new titles could be suggested to a customer looking for interesting popular music or evergreens.

In software business, the customer would be first introduced to check the version of the latest software purchase and, alternatively, new program updates or the second or third most popular software version.

In a preferred embodiment of the invention, wherein the periods, during which the services have been available, are also taken into account in addition to the amount of orders, the priority of new services can be enhanced by reduced weighting of services offered on a more permanently basis. This feature can improve the vivacity of the product slate and highlight new products and services.

In the following, the invention will be examined in greater detail with the help of exemplifying embodiments illustrated in the appended drawings in which

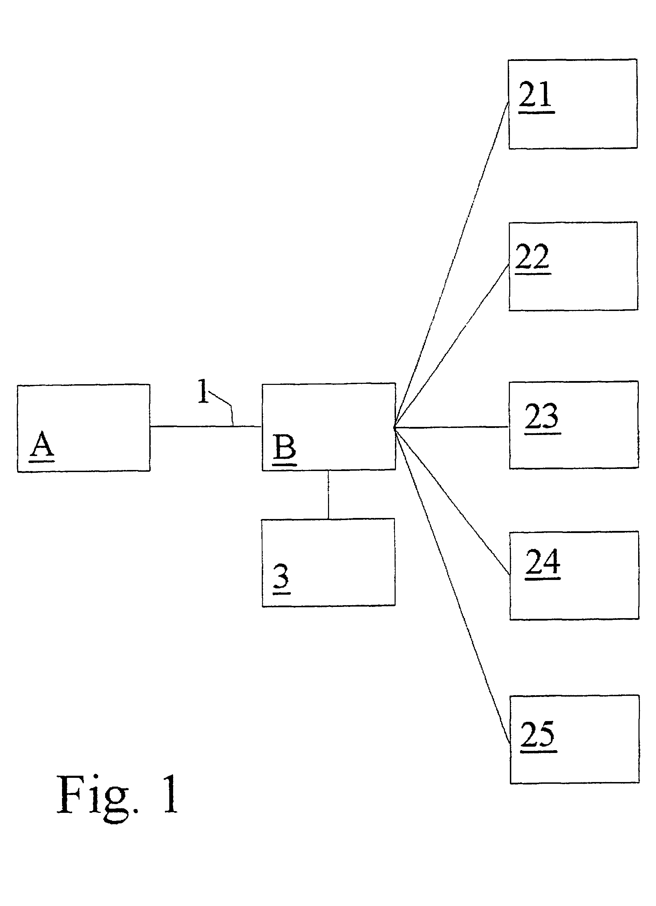

Fig. 1 shows a block diagram of the control system according to the invention.

The invention is suited for offering multiple types of services that are deliverable over a telephone network to customers. Such services are, e.g., video movies, software (including games, applications, etc.) and music services as well as communications and information services. Obviously, the profile generated for each service varies individually per product and per customer, too.

Methods according to the invention may also be used linked to each other in a parallel or sequential manner. Herein, a customer entering a given portal of services such as a WWW page, for instance, may use the selection control method first for searching a given service provider or a general category of services, such as information search services, from a large group of service providers or general categories of services. Next, the selection control method can be applied a second time within the system of a selected service provider or general category of services for ordering a desired specific service. This type of arrangement permits a two-stage selection to rapidly find a desired service from a very large and complex set of services.

The following exemplary case illustrates the application of the invention particularly to a video-on-demand ordering system. However, it is obvious to those skilled in the art, how the principles described in conjunction with the exemplifying embodiment may be applied to other types of services.

As shown in Fig. 1, customer A places on server B a request 1 to propose products. On the basis of information obtained from counters 21, 22, 23, 24, server B performs a count of scoring weights 3 for video movies so that counter 21 accumulates the number of earlier inquiries made by customer A, counter 22 accumulates the number of earlier inquiries made by customer A into a video movie class i, counter 23 accumulates the overall number of searches into all video movies in its database and counter 24 accumulates the number of previous searches concerning a certain video movie title v. Database 25 keeps a record of the earlier orders placed by the customer(s).

Accordingly, server B categorizes each video movie into its specific category i (e.g., westerns, comedies, etc.) and the system, at the customer's request, then proposes the customer to consider renting a video movie, e.g., from a group of 5-10 titles, whose scoring criteria are based on the customer's personal interests, release date of the product and the customer's earlier orders that are stored in the counters of the server as follows:

- $N_v$, overall number of orders into video movie title v stored in counter 24,
- $N_t$, overall number of all orders into all video movie titles in a certain database stored in counter 23,
- $N_{ia}$, number of orders by customer A into video movie category i stored in counter 22, and
- $N_a$, overall number of all orders by customer A stored in counter 21.

On the basis of this information, each video movie title v is weighted by a score count $P_v$ using the formula

$$P_v = \left( p_1 * \frac{N_{ia}}{N_a} \right)^k + \left( p_2 * \frac{N_v}{N_t} \right)^k + \left( p_3 * \frac{1}{1+T_v} \right)^k$$

where $T_v$ is the time from the release date of the video movie, $p_i$ are weighting coefficients and k = 1 or k = 2. Obviously, also other criteria can be used for setting the zero point of reference time $T_v$ different from the release time of the product offered in the service. Also the value of the exponent k can be set different from the values quoted above and, further, different values of the exponent k can be used as the exponents of the different terms in the formula. Respectively, the coefficients $p_i$ are set individually for each term according to their desired weight in the scoring formula. The coefficients pi may also be utilized to scale the computed score count of the product to fall within a given span of values. However, the coefficients $p_1$ and $p_2$ must always be different from zero, while if so desired, coefficient $p_3$ may also be set zero in a certain application when the effect of product aging in the scoring formula is desired to be omitted.

In addition to product scoring, server B checks from the database 25 the earlier orders placed by customer A and removes from the group of suggested video movies those ordered earlier by customer A. Subsequently, server B selects some 5-10 titles of highest scored video movies and presents to customer A a suggested list 4 of video movies assumed to meet the interests of customer A.

The contents of counters 21-24 may either represent the full accumulative history of contacts made by the customer or, alternatively, cover a suitable period of customer history backward from the latest order. An appropriate span of the history period could be 6-18 months.

The coefficients pi of the formula discussed above can be varied according to the application. For instance, in a music application, the coefficient of a certain music category can be given a higher value according to the musical preferences of customer A and there is no need to eliminate the earlier chosen music performances.

Accordingly, the coefficients pi may also be adjusted according to a user profile generated individually for each customer, whereby the profile of the customer is characterized with the help of, e.g., a preference vector formed by the coefficients $p_{1i}$. Herein, the different service categories can be weighted individually per each customer. The same strategy can also be applied to the other coefficients ($p_{2i}$, $p_{3i}$).

In the music business, the categorization i could be coarsely outlined, e.g.: classical/pop/rock/entertainment/country.

As for computer software, the use of the suggestion strategy according to the invention is best suited for offering alternative software solutions, because typically the most often downloaded software can be expected to represent the product of first choice.

Then, the software categorization i could be, e.g., the following:

Word processing/multimedia/computation/accessories/communications/games/etc.

As for information services, the categorization i could be, e.g., the following:

timetables/communal services/location information/ events/ entertainment/telephone numbers.

Thus, the present invention can be utilized in the selection control of a wide variety of different services. The invention also makes it possible to control, e.g., auxiliary services offered to the subscriber of a telephone connection, of which services the ones most frequently used by the subscriber can thus be made to pop up first thing when the subscriber opens the service control WWW page maintained by the telecommunications network operator. This feature allows the customer a quick facility to control, among other things, the number routing lists of calls placed on his connections.

## Claims

1. Method for giving advice on selecting services, such as a video-on-demand service, offered via a telecommunications network, in which method statistical information is gathered from a customer (A), **characterized in that** said method comprises the steps of

   - storing the history of the orders made by a customer (A) covering at least the following items:

     - overall number of orders ($N_a$) placed by said customer (A) over a given period of time, and

     - overall number of orders ($N_{ia}$) placed by said customer (A) in a given category (i),

   - storing the history of orders of the services covering at least the following items:

     - overall number of service orders ($N_t$), and

     - overall number of orders ($N_v$) per service item,

   - scoring the offered services on the basis of at least said stored information, and

   - offering services to said customer (A) in a weighted order based on said service scoring.

2. Method according to claim 1, **characterized in that** said services are offered prioritized in an order corresponding to said service scoring so that

   - an increase in the overall number of orders ($N_a$) placed by said customer (A) on said service decreases the priority,

   - an increase in the overall number of orders ($N_{ia}$) placed by said customer (A) in the category (i) of said given service increases the priority of said given service,

   - an increase in the overall number of service orders ($N_t$) decreases the priority of said given service, and

   - an increase in the overall number of orders ($N_v$) on said given service item increases the priority of said given service.

3. Method according to claim 1 or 2, **characterized in that** said services are offered in a prioritized order based on said service scoring so ordered that the priority of said service is decreased with an increasing lapse of time ($T_v$) counted from the start of said service, the release of said service or an equivalent reference instant of time associated with said service.

4. Method according to claim 3, **characterized in that** the priority-decreasing weight of each lapsed unit of time is made to decrease with time.

**5.** Method according to any of claims 1 - 4, **characterized in that** the scoring of suggested services is computed using a formula

$$P_v = \left(p_1 * \frac{N_{ia}}{N_a}\right)^k + \left(p_2 * \frac{N_v}{N_t}\right)^k + \left(p_3 * \frac{1}{1+T_v}\right)^k$$

**6.** Method according to claim 5, **characterized in that** the coefficients $p_1$, $p_2$ and/or $p_3$ are determined individually per customer in a user profile compiled for the customer.

**7.** Method according to claim 6, **characterized in that** the coefficients $p_1$, $p_2$ and/or p3 are determined in said user profile individually per service category.

**8.** Method according to any of claims 1 - 7, **characterized in that** said method is applied to a video-on-demand service.

**9.** Method according to any of claims 1 - 7, **characterized in that** said method is applied to scoring a music performance orderable over a telecommunications network.

**10.** Method according to any of claims 1 - 7, **characterized in that** said method is applied to scoring a software product orderable over a telecommunications network.

**11.** Method according to any of claims 1 - 7, **characterized in that** said method is applied to scoring an information service searchable over a telecommunications network.

**12.** Method according to any of claims 1 - 7, **characterized in that** said method is applied to scoring a communications service usable over a telecommunications network.

**Patentansprüche**

**1.** Verfahren zur Beratung über die Auswahl von in einem Telekommunikationsnetzwerk angebotenen Diensten, zum Beispiel einem Video-auf-Anfrage-Dienst, in welchem Verfahren statistische Informationen von einem Kunden (A) gesammelt werden, **dadurch gekennzeichnet, dass** das Verfahren folgende Schritte aufweist:

- Speichern der Historie der Aufträge, die der Kunde (A) erteilt hat, die mindestens die folgenden Punkte abdecken:

  - Gesamtanzahl der Aufträge ($N_a$), die von dem Kunden (A) über eine gegebene Zeitdauer erteilt wurden, und
  - Gesamtanzahl der Aufträge ($N_{ia}$), die von dem Kunden (A) in einer gegebenen Kategorie (i) erteilt wurden,

- Speichern der Historie der erteilten Aufträge über die Dienste, die mindestens die folgenden Punkte abdecken:

  - Gesamtanzahl der Dienstaufträge ($N_t$), und
  - Gesamtanzahl der Aufträge ($N_v$) pro Diensteinheit,

- Zählen der angebotenen Dienste auf Basis von mindestens der gespeicherten Informationen, und
- Anbieten von Diensten an den Kunden (A) in einer gewichteten Reihenfolge, basierend auf der Dienstzählung.

**2.** Verfahren nach Anspruch 1, **dadurch gekennzeichnet, dass** die Dienste nach Prioritäten in einer Reihenfolge entsprechend der Dienstzählung angeboten werden, so dass

- ein Anstieg der Gesamtanzahl an Aufträgen ($N_a$), die von dem Kunden (A) über den Dienst erteilt wurden, die Priorität senkt,
- ein Anstieg der Gesamtanzahl an Aufträgen ($N_{ia}$), die von dem Kunden (A) in der Kategorie (i) des gegebenen Dienstes erteilt wurden, die Priorität des gegebenen Dienstes erhöht,
- ein Anstieg der Gesamtanzahl der Dienstaufträge ($N_t$) die Priorität des gegebenen Dienstes senkt, und

- ein Anstieg der Gesamtanzahl an Aufträgen ($N_v$) über die gegebene Diensteinheit die Priorität des gegebenen Dienstes erhöht.

3. Verfahren nach Anspruch 1 oder 2, **dadurch gekennzeichnet, dass** die Dienste in einer nach Prioritäten geordneten Reihenfolge basierend auf der Dienstzählung angeboten werden, die so geordnet ist, dass die Priorität des Dienstes mit einer wachsenden verstrichenen Zeitdauer ($T_v$) abnimmt, gezählt vom Beginn des Dienstes, dem Herausgeben des Dienstes oder einem entsprechenden Bezugszeitpunkt in Verbindung mit diesem Dienst.

4. Verfahren nach Anspruch 3, **dadurch gekennzeichnet, dass** das die Priorität senkende Gewicht jeder verstrichenen Zeiteinheit mit der Zeit abnimmt.

5. Verfahren nach einem der Ansprüche 1 bis 4, **dadurch gekennzeichnet, dass** das Zählen von vorgeschlagenen Diensten unter Verwendung der folgenden Formel berechnet wird:

$$P_v = \left(p_1 * \frac{N_{ia}}{N_a}\right)^k + \left(p_2 * \frac{N_v}{N_t}\right)^k + \left(p_3 * \frac{1}{1+T_v}\right)^k$$

6. Verfahren nach Anspruch 5, **dadurch gekennzeichnet, dass** die Koeffizienten $p_1$, $p_2$ und/oder $p_3$ pro Kunde in einem Benutzerprofil, das für den Kunden erstellt wird, individuell bestimmt werden.

7. Verfahren nach Anspruch 6, **dadurch gekennzeichnet, dass** die Koeffizienten $p_1$, $p_2$ und/oder $p_3$ in dem Benutzerprofil individuell pro Dienstkategorie bestimmt werden.

8. Verfahren nach einem der Ansprüche 1 bis 7, **dadurch gekennzeichnet, dass** das Verfahren für einen Video-auf-Anfrage-Dienst verwendet wird.

9. Verfahren nach einem der Ansprüche 1 bis 7, **dadurch gekennzeichnet, dass** das Verfahren verwendet wird, um eine Musikleistung, die über ein Telekommunikationsnetzwerk bestellt werden kann, zu zählen.

10. Verfahren nach einem der Ansprüche 1 bis 7, **dadurch gekennzeichnet, dass** das Verfahren verwendet wird, um ein Softwareprodukt, das über ein Telekommunikationsnetzwerk bestellt werden kann, zu zählen.

11. Verfahren nach einem der Ansprüche 1 bis 7, **dadurch gekennzeichnet, dass** das Verfahren verwendet wird, um einen Informationsdienst, der über ein Telekommunikationsnetzwerk gesucht werden kann, zu zählen.

12. Verfahren nach einem der Ansprüche 1 bis 7, **dadurch gekennzeichnet, dass** das Verfahren verwendet wird, um einen Kommunikationsdienst, der über ein Telekommunikationsnetzwerk verwendet werden kann, zu zählen.

**Revendications**

1. Technique permettant de donner un avis lors de la sélection de services tels qu'un service vidéo-à-la-demande, offerts via un réseau de télécommunications, technique dans laquelle l'information statistique est rassemblée en provenance d'un client'(A), **caractérisée en ce que** ladite technique comprend les étapes :

    - de stockage de l'historique des commandes effectuées par le client (A) et couvrant au moins les rubriques suivantes :

        . nombre global des commandes ($N_a$) émises par ledit client (A) durant une période de temps donnée, et
        . nombre global des commandes ($N_{ia}$) émises par ledit client (A) dans une catégorie (i) donnée,

    - de stockage de l'historique des commandes des services couvrant au moins les rubriques suivantes :

        . nombre global de commandes de services ($N_t$), et
        . nombre global de commandes ($N_v$) par rubrique de service,

    - d'estimation des services offerts sur la base au moins de ladite information stockée, et

- d'offre de services audit client (A) dans un ordre pondéré sur la base de ladite estimation des services.

2. Technique selon la revendication 1, **caractérisée en ce que** lesdits services sont offerts selon un ordre de priorité correspondant à ladite estimation des services, de façon à ce que

   - une augmentation du nombre global de commandes ($N_a$) émises par ledit client (A) sur ledit service diminue la priorité,

   - une augmentation du nombre global de commandes ($N_{ia}$) émises par ledit client (A) dans la catégorie (i) dudit service rendu augmente la priorité dudit service rendu,

   - une augmentation du nombre global de commandes de service (Nt) diminue la priorité dudit service rendu, et

   - une augmentation du nombre global de commandes ($N_v$) sur ladite rubrique de service rendu augmente la priorité dudit service rendu.

3. Technique selon la revendication 1 ou la revendication 2, **caractérisée en ce que** lesdits services sont offerts dans un ordre de priorité basé sur l'estimation dudit service et ordonné de telle sorte que la priorité dudit service est diminuée lorsqu'il y a augmentation du laps de temps ($T_v$) compté à partir du démarrage dudit service, du déclenchement dudit service ou d'un instant de temps de référence équivalent associé audit service.

4. Technique selon la revendication 3, **caractérisée en ce que** la pondération diminuant la priorité, de chaque unité de temps écoulée est établie de manière à diminuer avec le temps.

5. Technique selon l'une quelconque des revendications 1 à 4, **caractérisée en ce que** l'estimation des services proposés est calculée à l'aide de la formule :

$$P_v = \left[ p_1 \times \frac{N_{ia}}{N_a} \right]^k + \left[ p_2 \times \frac{N_v}{N_t} \right]^k + \left[ p_3 \times \frac{1}{1 + T_v} \right]^k$$

6. Technique selon la revendication 5, **caractérisée en ce que** les coefficients $p_1$, $p_2$ et/ou $p_3$ sont déterminés individuellement, par client, selon un profil d'utilisateur établi pour ledit client.

7. Technique selon la revendication 6, **caractérisée en ce que** les coefficients $p_1$, $p_2$ et/ou $p_3$ sont déterminés dans ledit profil d'utilisateur, individuellement, par catégorie de service.

8. Technique selon l'une quelconque des revendications 1 à 7, **caractérisée en ce que** ladite technique est appliquée à un service de vidéo-à-la-demande.

9. Technique selon l'une quelconque des revendications 1 à 7, **caractérisée en ce que** ladite technique est appliquée à l'estimation d'une exécution musicale pouvant être commandée par l'intermédiaire d'un réseau de télécommunications.

10. Technique selon l'une quelconque des revendications 1 à 7, **caractérisée en ce que** ladite technique est appliquée à l'estimation d'un produit logiciel pouvant être commandé par l'intermédiaire d'un réseau de télécommunications.

11. Technique selon l'une quelconque des revendications 1 à 7, **caractérisée en ce que** ladite technique est appliquée à l'estimation d'un service d'information pouvant être recherché par l'intermédiaire d'un réseau de télécommunications.

12. Technique selon l'une quelconque des revendications 1 à 7, **caractérisée en ce que** ladite technique est appliquée à l'estimation d'un service de communications utilisable par l'intermédiaire d'un réseau de télécommunications.

Fig. 1